(19) Europäisches Patentamt
European Patent Office
Office européen des brevets

(11) EP 1 806 566 A1

(12) EUROPEAN PATENT APPLICATION
published in accordance with Art. 158(3) EPC

(43) Date of publication:
11.07.2007 Bulletin 2007/28

(51) Int Cl.:
G01F 23/14 (2006.01)          G01N 25/18 (2006.01)
G01N 9/04 (2006.01)

(21) Application number: 05795597.3

(22) Date of filing: 20.10.2005

(86) International application number:
PCT/JP2005/019278

(87) International publication number:
WO 2006/046457 (04.05.2006 Gazette 2006/18)

(84) Designated Contracting States:
AT BE BG CH CY CZ DE DK EE ES FI FR GB GR
HU IE IS IT LI LT LU LV MC NL PL PT RO SE SI
SK TR

(30) Priority: 25.10.2004  JP 2004309647

(71) Applicant: MITSUI MINING & SMELTING CO., LTD.
Tokyo 141-8584 (JP)

(72) Inventors:
• KAWANISHI, T.,
Mitsui Mining & Smelting Co., Ltd.
Ageo-shi, Saitama 3620021 (JP)
• YAMAGISHI, K.,
Mitsui Mining & Smelting Co., Ltd.
Ageo-shi, Saitama 3620021 (JP)

(74) Representative: Gervasi, Gemma et al
Notarbartolo & Gervasi GmbH,
Bavariaring 21
80336 München (DE)

(54) **LIQUID LEVEL DETECTING METHOD AND LIQUID LEVEL DETECTING DEVICE**

(57) A liquid level detecting method is provided for detecting the level of a liquid at a high accuracy by performing correction by using the density of the liquid, in the case of detecting the liquid level by using a pressure sensor. The pressure sensor (3) is arranged to have a contact with the liquid. A liquid pressure applied to the pressure sensor (3) is detected by the pressure sensor, and the liquid level is calculated based on the liquid pressure and the density of the liquid. Namely, the liquid level detecting method includes a process of calculating an assumed liquid level value, assuming that the liquid has a prescribed density, based on the liquid pressure; a process of discriminating the concentration of the liquid by a concentration discriminating sensor part (2); a process of obtaining a density value of the liquid, based on the discriminated liquid concentration and a relationship between the concentration and the density of the liquid; and a process of calculating the liquid level based on the assumed liquid level value and the density value.

FIG.2

EP 1 806 566 A1

**Description**

Technical Field

The present invention relates to a liquid level detecting method and liquid level detecting device and, in particular, to the liquid level detecting method and liquid level detecting device for detecting the level of liquid at high accuracy by performing correction by using the density of the liquid in the case of detecting the liquid level by using a pressure sensor.
A method and device for detecting the liquid level according to the present invention can be used for detecting the level of a urea solution stored in a tank and sprayed to an exhaust gas purification catalyst for decomposition of nitrogen oxide (NOx) in a system for purifying exhaust gas emitted from an internal-combustion engine of, e.g., a car.

Background Art

In an internal-combustion engine of a car, fossil fuels such as gasoline or light-oil are burned. Exhaust gas generated by the burning contains water and carbon dioxide, as well as environmental pollutants such as unburned carbon monoxide (CO), unburned carbon hydride (HC), sulfur oxide (SOx), and nitrogen oxide (NOx). In recent years, various countermeasures to purify the car exhaust gas have been taken especially for environmental protection and prevention of living environment pollution.
As one of such countermeasures, a use of an exhaust gas purification catalyst unit can be exemplified. Specifically, a three-way catalyst for exhaust gas purification is disposed in the middle of an exhaust system, and, there, CO, HC, NOx, etc. are decomposed by oxidation-reduction process to thereby render the above environmental pollutants harmless. In order to maintain the decomposition of NOx in the catalyst unit, urea solution is sprayed to the catalyst from upstream side of the catalyst unit in the exhaust system. In order to enhance the rate of decomposition of NOx, urea concentration of the urea solution should fall within a specified range, and a urea concentration of 32.5% is considered to be optimum.
The urea solution is stored in a urea solution tank installed in a car. In order to avoid lowering of the catalytic function based on ceasing of supply of the urea solution to the catalyst for exhaust gas purification due to lack of the urea solution in the tank, it is most preferable to detect an amount of the urea solution remaining in the tank and to display the detected amount or give the alarm when the remaining amount of the urea solution becomes less than the predetermined lower limit thereof.
For detecting the remaining amount of the urea solution, level of the liquid, i.e. urea solution, is detected. The liquid level may be detected by using a pressure sensor arranged in the tank at a level just above the bottom to detect the pressure of liquid, on the basis of which the liquid level is calculated. Conventionally, when calculating the liquid level based on the detected pressure of liquid, it is assumed that density of the liquid is the predetermined value, for example, a density value of the urea solution having a urea concentration of 32.5%.
However, urea concentration of the urea solution may vary with time, and the urea concentration of the urea solution stored in the tank is not always constant. Accordingly, it is difficult to detect the level of the urea solution having such a time-varying urea concentration with use of the conventional method at very high accuracy.
Conventionally, measurement of the concentration of urea in the urea solution has not directly been made. Meanwhile, a technique that uses NOx sensors disposed respectively on the upstream and downstream sides of the catalyst unit in the exhaust system has been made. In this technique, it is determined whether optimum decomposition of NOx has been carried out based on the difference in NOx concentration detected by these sensors. However, this technique aims at measuring the effect of a reduction in the amount of NOx and therefore cannot determine whether or not the liquid is urea solution having a predetermined urea concentration even at the beginning of the spray of urea solution as well as before the spray. Further, the NOx sensor used in such a technique did not have sufficient sensitivity for ensuring spray of urea solution having a urea concentration falling within a predetermined range.
JP-A-11-153561 discloses a fluid identifying method. In this method, a current is applied to heat a heater, and the heat generated is used to heat a temperature sensor. Then, thermal influence is applied to heat transfer from the heater to temperature sensor using a fluid to be identified and, based on an electrical output value of the temperature sensor which corresponds to a resistance value, the type of the fluid to be identified is determined. The application of a current to the heater is periodically performed in this method.
However, since the current application to the heater is periodically performed (that is, current is applied with a large number of pulses) in the fluid identifying method, it takes time to carry out the identification processing. That is, it is difficult to identify the type of a fluid at short times. Further, although this method can distinguish among substances (e.g., water, air, and oil) having properties largely different from each other using representative values, it is difficult to identify urea concentration of such a urea solution correctly and quickly.

Disclosure of Invention

The present invention has been made in view of the above situation, and an object thereof is to provide a liquid level detecting method and liquid level detecting device for detecting the level of liquid at high accuracy by performing correction by using the density of the liquid in the case of detecting the liquid level by using a pressure sensor.

To achieve the above object, according to the present invention, there is provided a liquid level detecting method in which a liquid pressure applied to a pressure sensor is detected by the pressure sensor arranged to be in contact with liquid, and a level of the liquid is calculated based on the liquid pressure and a density of the liquid, comprising the steps of:

calculating an assumed liquid level value based on the liquid pressure, assuming that the liquid has a predetermined density;

identifying a concentration of the liquid;

obtaining a density value of the liquid, based on the identified concentration of liquid and a relationship between the concentration and density of the liquid; and

calculating the liquid level based on the assumed liquid level value and the obtained density value.

In an aspect of the present invention, the liquid concentration is identified by applying a single pulse voltage to a heater of an indirect-heating concentration detection section comprising the heater and a temperature sensor to allow the heater to generate heat, and using outputs of a concentration detecting circuit including both the temperature sensor of the indirect-heating concentration detection section and a liquid temperature detecting section for detecting a temperature of the liquid. In an aspect of the present invention, when identifying the liquid concentration, the liquid concentration is calculated by using a concentration-corresponding voltage value corresponding to a difference between an initial temperature of the temperature sensor and a peak temperature thereof when heat is generated by the heater. In an aspect of the present invention, an average initial voltage value which is obtained by sampling an initial voltage predetermined number of times before the start of application of the single pulse to the heater and averaging them is used as a voltage value corresponding to the initial temperature of the temperature sensor, an average peak voltage value which is obtained by sampling a peak voltage predetermined number of times before the end of application of the single pulse to the heater and averaging them is used as a voltage value corresponding to the peak temperature of the temperature sensor, and a difference between the average peak voltage value and average initial voltage value is used as the concentration-corresponding voltage value. In an aspect of the present invention, a calibration curve indicating a relationship between the temperature and concentration-corresponding voltage value with respect to known reference liquids having different concentrations is prepared, and the liquid concentration is identified using the calibration curve based on an output value corresponding to the temperature of the liquid to be identified and the concentration-corresponding voltage value. In an aspect of the present invention, the liquid is urea solution.

To achieve the above object, according to the present invention, there is also provided a liquid level detecting device, in which a level of liquid is calculated based on a liquid pressure and a density of the liquid, comprising;

a pressure sensor arranged to be in contact with the liquid, which detects the liquid pressure;

a concentration identifying sensor section having both an indirect-heating concentration detection section including a heater and temperature sensor and a liquid temperature detecting section for detecting the temperature of the liquid, the indirect-heating concentration detection section and liquid temperature detecting section being provided with a heat transfer member for concentration detection section and a heat transfer member for liquid temperature detecting section for heat exchange with the liquid, respectively;

a support portion to which the concentration identifying sensor section and pressure sensor are attached; and

a calculation section which applies a single pulse voltage to the heater of the indirect-heating concentration detection section to allow the heater to generate heat, identifies the concentration of liquid based on outputs of a concentration detecting circuit including both the temperature sensor of the indirect-heating concentration detection section and the liquid temperature detecting section, and obtains a density value of the liquid based on the identified concentration of liquid and a relationship between the concentration and density of the liquid,

wherein the calculation section calculates an assumed liquid level value based on the liquid pressure, assuming that the liquid has a predetermined density, and calculates the liquid level based on the assumed liquid level value and the obtained density value.

In an aspect of the present invention, the calculation section identifies the liquid concentration by using a concentration-corresponding voltage value corresponding to a difference between an initial temperature of the temperature sensor and a peak temperature thereof when heat is generated by the heater. In an aspect of the present invention, an average initial voltage value which is obtained by sampling an initial voltage predetermined number of times before the start of application of the single pulse to the heater and averaging them is used as a voltage value corresponding to the initial temperature of the temperature sensor, an average peak voltage value which is obtained by sampling a peak voltage predetermined number of times before the end of application of the single pulse to the heater and averaging them is used as a voltage value corresponding to the peak temperature of the temperature sensor, and a difference between the average peak voltage value and average initial voltage value is used as the concentration-corresponding voltage value. In an aspect of the present invention, a liquid-temperature-corresponding voltage value corresponding to the temperature of liquid is input to the calculation section from the liquid temperature detecting section, and, in the calculation section, the liquid is identified based on an output value corresponding to the temperature of the liquid to be identified and the concentration-corresponding voltage value using the calibration curve indicating a relationship between the temperature and concentration-corresponding voltage value with respect to known reference liquids having different concentrations. In an aspect of the present invention, the liquid is urea solution.

According to the present invention, since an assumed liquid level value is calculated based on the liquid pressure calculating, assuming that the liquid has a predetermined density; a concentration of the liquid is identified; a density value of the liquid is obtained based on the identified concentration of liquid and a relationship between the concentration and density of the liquid; and the liquid level is calculated based on the assumed liquid level value and the obtained density value, it is possible to detect the liquid level at high accuracy while preventing detection error from occurring due to density of the liquid.

Brief Description of the Drawings

FIG. 1 is an exploded perspective view showing an embodiment of a liquid level detecting device according to the present invention;
FIG. 2 is a partly omitted cross-sectional view of the liquid level detecting device of FIG. 1;
FIG. 3 is a view showing a state where the liquid level detecting device has been set to a tank;
FIG. 4 is an enlarged view showing an indirect-heating concentration detection section and a liquid temperature detecting section;
FIG. 5 is a cross-sectional view showing the indirect-heating concentration detection section of FIG. 4;
FIG. 6 is an exploded perspective view showing a thin-film chip of the indirect-heating concentration detection section;
FIG. 7 is a diagram showing a configuration of a circuit for concentration identification;
FIG. 8 is a diagram showing a relationship between a single pulse voltage P applied to a heater and sensor output Q;
FIG. 9 is a diagram showing an example of a first calibration curve;
FIG. 10 is a diagram showing an example of a second calibration curve;
FIG. 11 shows an example of a liquid-temperature-corresponding output value T;
FIG. 12 is a flowchart showing a liquid level detecting process;
FIG. 13 shows a relationship between a liquid pressure and liquid level regarding water; and
FIG. 14 shows a relationship between a urea concentration and density,

wherein reference numeral 2 denotes a concentration identifying sensor section, 2a base body, 2b,2c O-ring, 2d cover member, 21 indirect-heating concentration detection section, 22 liquid temperature detecting section, 23 mold resin, 24 introduction passage for liquid to be measured, 21a thin-film chip, 21b bonding material, 21c,22c metal fin, 21d bonding wire, 21e,22e external electrode terminal, 21a1 substrate, 21a2,22a2 temperature sensor, 21a3 interlayer dielectric film, 21a4 heater, 21a5 heater electrode, 21a6 protection film, 21a7 electrode pad, 3 pressure sensor, 4 support portion, 4a attachment portion, 6 circuit substrate, 8 cover member, 10,11,14 wiring, 12 connector, 64,66 resistor, 68 bridge circuit, 70 differential amplifier, 71 liquid temperature detecting amplifier, 72 microcomputer, 74 switch, 76 output buffer circuit, 100 urea solution tank, 102 opening, 104 liquid level detecting device, 106 inlet piping, 108 outlet piping, 110 urea solution supply pump, and US denotes a urea solution.

Best Mode for Carrying Out the Invention

Embodiments of the present invention will be described below with reference to the accompanying drawings.

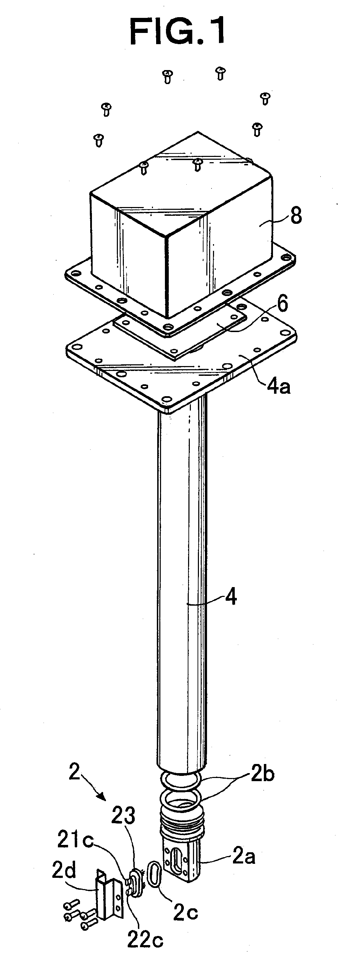

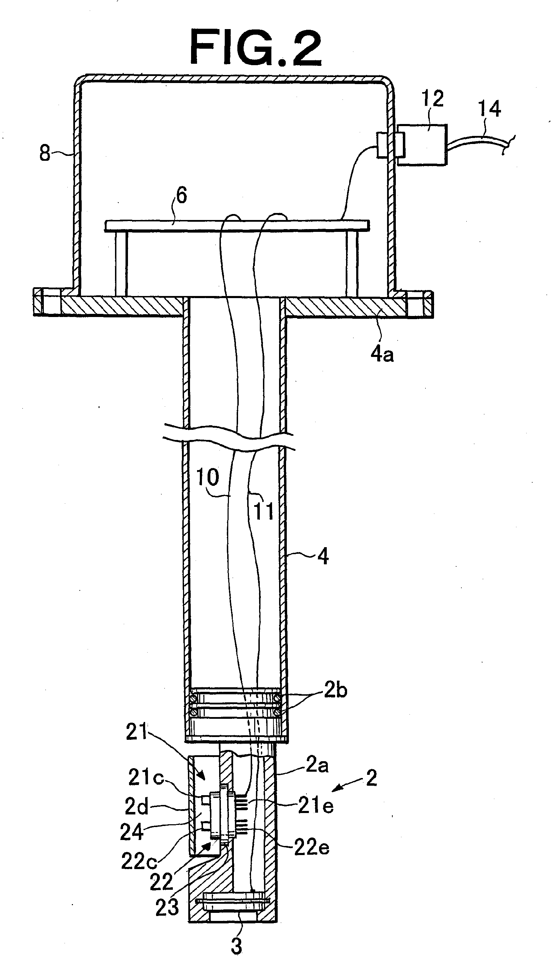

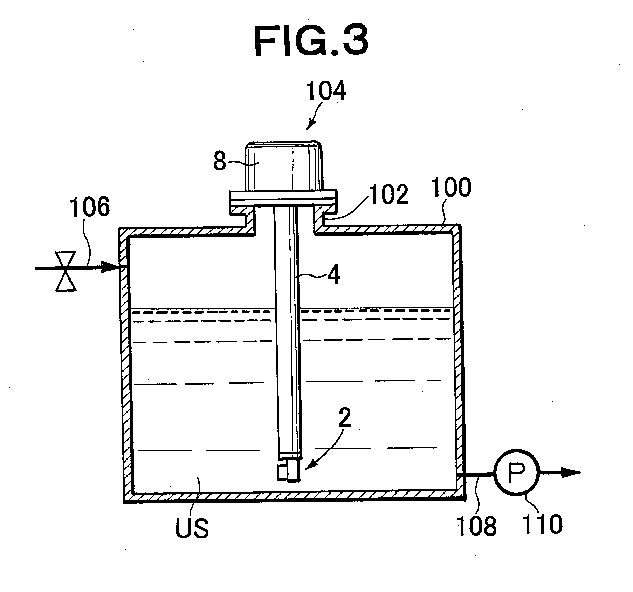

FIG. 1 is an exploded perspective view showing an embodiment of a liquid level detecting device according to the present invention, which is used for performing a liquid level detecting method according to the present invention. FIG. 2 is a partly omitted cross-sectional view of the liquid level detecting device. FIG. 3 is a view showing a state where the liquid level detecting device has been set to a tank. In the present embodiment, urea solution is used as a liquid.
As shown in FIG. 3, a urea solution tank 100 for NOx decomposition that constitutes an exhaust gas purification system installed in, e.g., a car has, at its upper portion, opening 102. A liquid level detecting device 104 according to the present invention is fitted to the opening 102. The urea solution tank 100 is connected to both an inlet piping 106 through which the urea solution is introduced into the tank and an outlet piping 108 through which the urea solution is discharged from the tank. The outlet piping 108 is connected to the tank at substantially the same height position as the bottom line of the tank 100, and starts from the outlet of the tank 100 to a not shown urea solution sprayer through a urea solution supply pump 110. In an exhaust system, the urea solution is sprayed to a catalyst unit by the urea solution sprayer disposed in immediately upstream side of an exhaust gas purification catalyst unit.

The liquid level detecting device 104 has an identifying sensor section (identifying sensor unit) 2, pressure sensor 3 and support portion 4. The identifying sensor section 2 is attached to one end (lower end) of the support portion 4, and an attachment portion 4a for attachment to the tank opening 102 is attached to the other end (upper end) of the support portion 4.

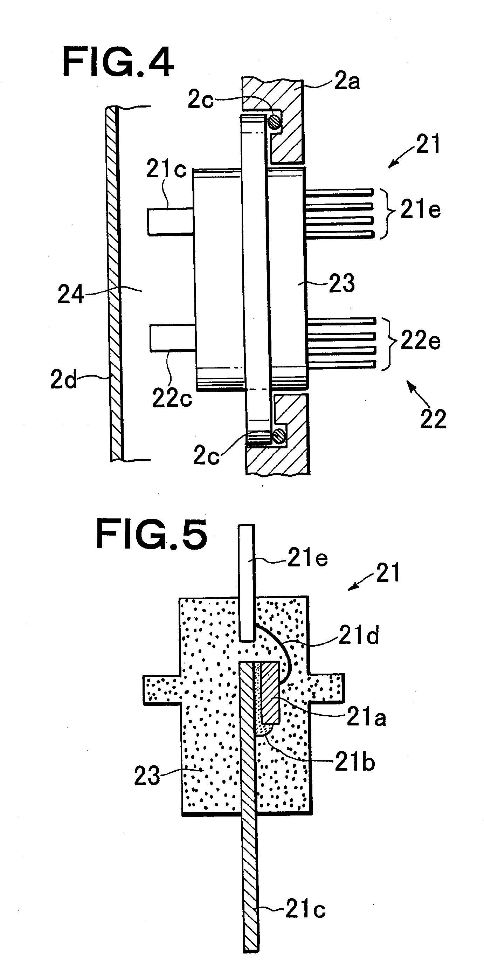

The identifying sensor section 2 has an indirect-heating concentration detection section 21 including a heater and temperature sensor (heat senor) and a liquid temperature detecting section (liquid temperature sensing section) 22 for detecting the temperature of a liquid to be measured. The indirect-heating concentration detection section 21 and liquid temperature detecting section 22 are disposed apart from each other in vertical direction by a predetermined interval. FIG. 4 shows, in an enlarged manner, the indirect-heating concentration detection section 21 and liquid temperature detecting section 22. FIG. 5 shows a cross-section of FIG. 4.

As shown in FIGS. 4 and 5, the indirect-heating concentration detection section 21 and liquid temperature detecting section 22 are integrated with each other by means of mold resin 23. As shown in FIG. 5, the indirect-heating concentration detection section 21 has a thin-film chip 21a including the heater and temperature sensor, a metal fin 21c serving as a heat transfer member for concentration detection section, which is coupled to the thin-film chip 21a by means of a bonding material 21b, and an external electrode terminal 21e electrically connected respectively to electrodes of the heater and temperature sensor of the thin-film chip 21a by means of a bonding wire 21d. The liquid temperature detecting section 22, which has the same configuration as that of the indirect-heating concentration detection section 21, has a metal fin 22c serving as a heat transfer member for liquid temperature detecting section and an external electrode terminal 22e.

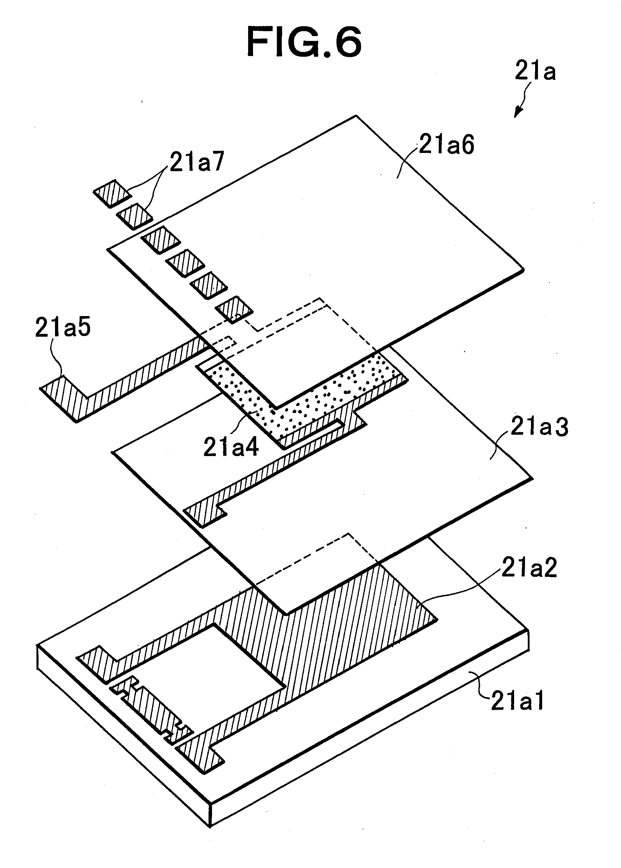

FIG. 6 is an exploded perspective view showing the thin-film chip 21a of the indirect-heating concentration detection section 21. The thin-film chip 21a has a laminated body in which, for example, a substrate 21a1 made of $Al_2O_3$, a temperature sensor 21a2 made of Pt, an interlayer dielectric film 21a3 made of $SiO_2$, a heater 21a4 made of $TaSiO_2$, a heater electrode 21a5 made of Ni, a protection film 21a6 made of $SiO_2$, and an electrode pad 21a7 made of Ti/Au are sequentially laminated. Although not shown, the temperature sensor 21a2 is formed in a zig-zag pattern. Although a thin-film chip 22a of the liquid temperature detecting section 22 has the same configuration as that of the thin-film chip 21a of the indirect-heating concentration detection section 21, it does not allow the heater to be active, but allows only a temperature sensor 22a2 to be active.

As shown in FIGS. 1 and 2, the identifying sensor section 2 has a base body 2a attached to the lower end of the support portion 4. When the base body 2 is attached to the support portion 4, 0-rings 2b are interposed therebetween. A mold resin 23 integrating the indirect-heating concentration detection section 21 and liquid temperature detecting section 22 is attached to the side surface of the base body 2a through an 0-ring 2c. A cover member 2d is so provided to the base body 2a as to surround the metal fin 21c for concentration detection section and metal fin 22c for liquid temperature detecting section. In a state where the cover member 2d has been attached to the base body 2a, an introduction passage 24 for liquid to be measured is formed. The introduction passage 24 extends, passing through the metal fin 21c for concentration detection section and metal fin 22c for liquid temperature detecting section, in a vertical direction with its upper and lower ends opened. Further, in a state where the cover member 2d has been attached to the base body 2a, the flange portion of the mold resin 23 is pressed against the base body 2a to cause the mold resin 23 to be fixed to the base body 21a.

A circuit substrate 6 that constitutes a liquid type detecting circuit to be described later is disposed on the upper end of the support portion 4. A cover member 8 is so attached to the upper end of the support portion 4 as to cover the circuit substrate 6. As shown in FIG. 2, a wiring 10 electrically connecting the indirect-heating concentration detection section 21 and liquid temperature detecting section 22 of the identifying sensor section 2 to the circuit substrate 6 extends inside the support portion 4. A microcomputer that constitutes a calculation section to be described later is mounted on the circuit substrate 6. A wiring 14 extends between the circuit substrate 6 and an external device through a connector 12 provided to the cover member 8 for communication between them. The calculation section may be disposed outside the circuit substrate 6. In this case, the circuit substrate 6 and calculation section are connected through the wiring 14.

The above-mentioned base body 2a and cover member 2d of the identifying sensor section 2, support portion 4, and cover member 8 are made of a corrosion-resistant material such as a stainless steel.

The pressure sensor 3 is directly attached to the base body 2a of the identifying sensor section 2 so that it is indirectly attached to the support portion 4. There is provided inside the support portion 4 a wiring 11 electrically connecting the pressure sensor 3 to the circuit substrate 6.

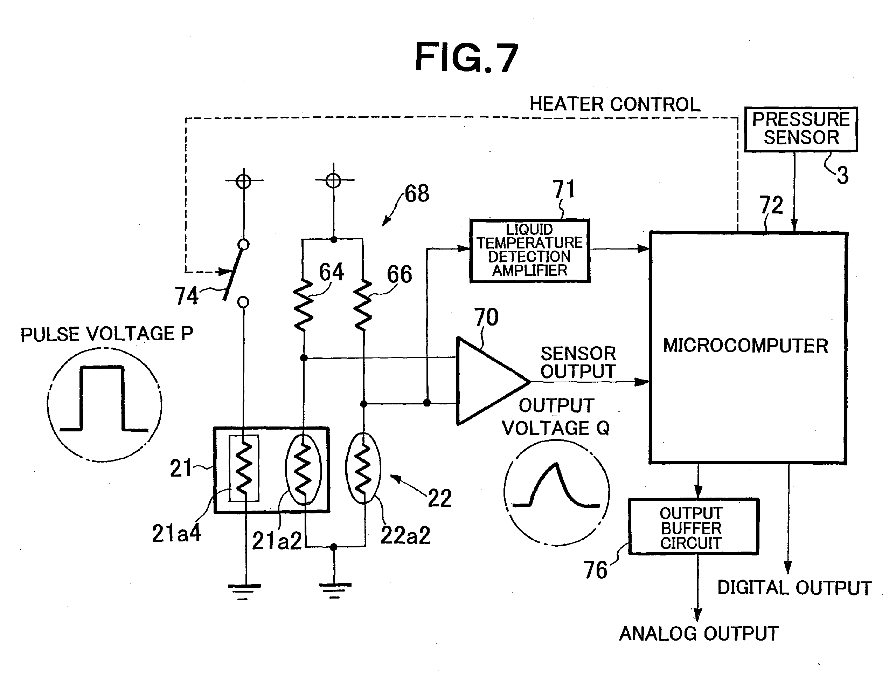

FIG. 7 shows a configuration of a circuit for liquid level detecting performed in the present embodiment. The temperature sensor 21a2 of the indirect-heating concentration detection section 21, temperature sensor 22a2 of the liquid temperature detecting section 22, and two resistors 64, 66 constitute a bridge circuit 68. The output of the bridge circuit 68 is input to a differential amplifier 70, and the output of the differential amplifier 70 (also referred to as "concentration detecting circuit output" or "sensor output") is input to the microcomputer 72 that constitutes a calculation section through a not shown A/D converter. Further, to the microcomputer 72, a liquid-temperature-corresponding output value which corresponds to the temperature of a liquid to be measured is input from the temperature sensor 22a2 of the liquid temperature detecting section 22 through a liquid temperature detecting amplifier 71. Further, a heater control signal for controlling open/close of a switch 74 is output from the microcomputer 72 to the switch 74 disposed in a power supplying line to the heater 21a4 of the indirect-heating concentration detection section 21.

A concentration identifying operation in the present embodiment will be described below.

Firstly, the tank 100 is filled with a urea solution US used as the liquid to be measured and, at the same time, the introduction passage 24 for urea solution, i.e. the introduction passage for liquid to be measured, which is formed by the cover member 2d of the identifying sensor section 2, is filled with the urea solution US. The urea solution US supplied in the tank 100 and introduction passage 24 for urea solution does not substantially flow.

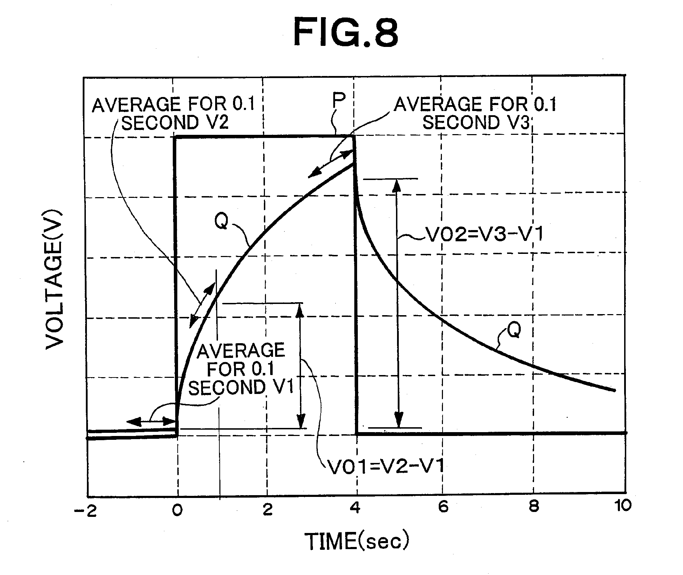

The switch 74 is closed for a predetermined time period (e.g., 8 seconds) by means of the heater control signal output from the microcomputer 72 to the switch 74. Then, a single pulse voltage P having a predetermined height (e.g., 10V) is applied to the heater 21a4 to allow the heater to generate heat. An output voltage (sensor output) Q of the differential amplifier 70 at that time gradually increases while a voltage is applied to the heater 21a4 and gradually decreases after the voltage application to the heater 21a4 is ended, as shown in FIG. 8.

As shown in FIG. 8, the microcomputer 72 samples the sensor outputs for a predetermined time period (e.g., 0.1 seconds) before the start of voltage application to the heater 21a4 a predetermined number of times (e.g., 256 times) and performs calculation for obtaining the average value of the sensor outputs to thereby obtain an average initial voltage value V1. The average initial voltage value V1 corresponds to the initial temperature of the temperature sensor 21a2.

Further, as shown in FIG. 8, the microcomputer 72 samples the sensor outputs at the time point after a first time period (e.g., 1/2 or less of the single pulse application time (e.g., 0.5 to 3 seconds; 2 seconds in FIG. 8)), which is comparatively short time period, has elapsed from the start of the voltage application to the heater (specifically, immediately before the elapse of the first time) a predetermined number of times (e.g., 256 times) and performs calculation for obtaining the average value of the sensor outputs to thereby obtain an average first voltage value V2. The average first voltage value V2 corresponds to a first temperature of the temperature sensor 21a2, which is obtained at the time point after the first time period has elapsed from the start of the single pulse application. Then, a difference V01 (=V2-V1) between the average initial voltage value V1 and average first voltage value V2 is obtained as a concentration-corresponding first voltage value.

Further, as shown in FIG. 8, the microcomputer 72 samples the sensor outputs at the time point after a second time period (e.g., single pulse application time (8 seconds in FIG. 8)), which is comparatively long time period, has elapsed from the start of the voltage application to the heater (specifically, immediately before the elapse of the second time) a predetermined number of times (e.g., 256 times) and performs calculation for obtaining the average value of the sensor outputs to thereby obtain an average second voltage value V3. The average second voltage value V3 corresponds to a second temperature of the temperature sensor 21a2, which is obtained at the time point after the second time period has elapsed from the start of the single pulse application. Then, a difference V02 (=V3-V1) between the average initial voltage value V1 and average second voltage value V3 is obtained as a concentration-corresponding second voltage value.

A part of the heat generated in the heater 21a4 at the time of the single pulse voltage application is transferred to the temperature sensor 21a2 through the urea solution. This heat transfer consists primarily of two modes which differ from each other depending on the time from the start of the pulse application. That is, at a first stage within a comparatively short time period (e.g., 3 seconds, especially 2 seconds) from the start of the pulse application, the heart transfer is mainly controlled by conduction (therefore, the concentration-corresponding first voltage value V01 is mainly influenced by the heat conductivity of a liquid). At a second stage after the first stage, the heat transfer is mainly controlled by natural convection (therefore, the concentration-corresponding second voltage value V02 is mainly influenced by the kinetic viscosity of a liquid). It is because that, at the second stage, the natural convection occurs by the liquid heated at the first stage so that rate of the heat transfer by the natural convection increases.

As described above, in the present invention, identification of the concentration is performed based on the fact that solutions differ from each other in terms of a combination of the concentration-corresponding first voltage value V01 and concentration-corresponding second voltage value V02. That is, the concentration-corresponding first voltage value V01 and concentration-corresponding second voltage value V02 are influenced by different properties, i.e., heat conductivity and kinetic viscosity, so that the combination of the concentration-corresponding first voltage value V01 and concentration-corresponding second voltage value V02 varies depending on the solution type, i.e. urea concentration of the urea solution, which enables the concentration identification as described above.

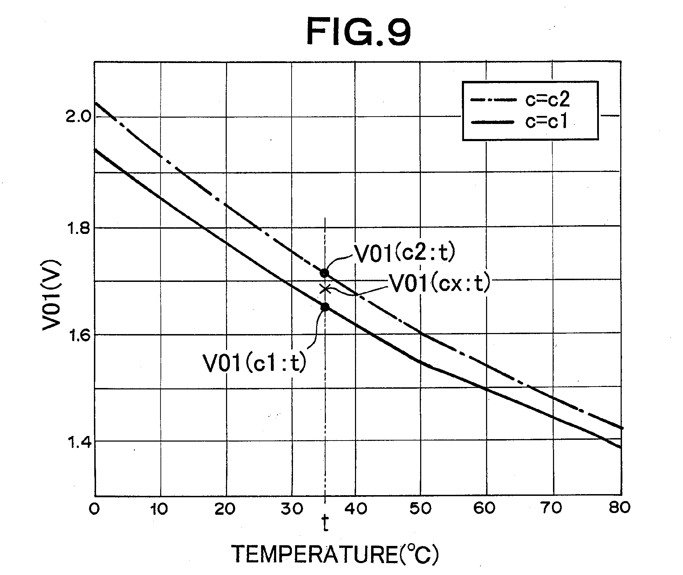

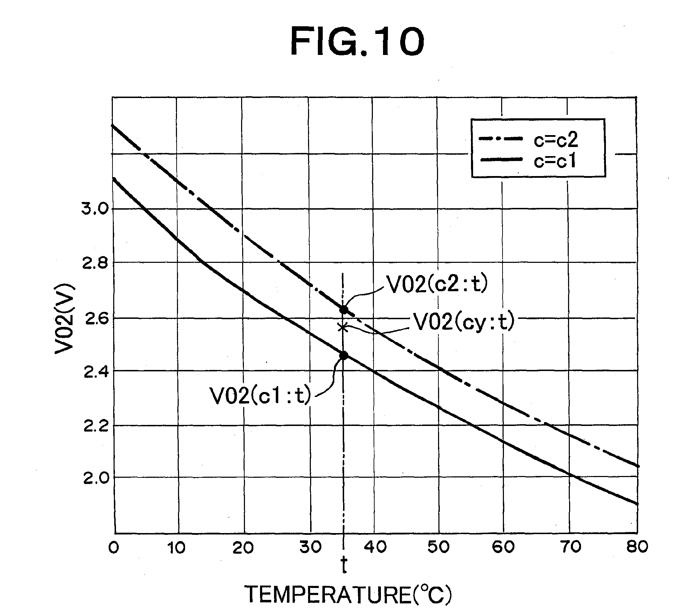

In the embodiment of the present invention, a first calibration curve indicating a relationship between the temperature and concentration-corresponding first voltage value V01 and a second calibration curve indicating a relationship between the temperature and concentration-corresponding second voltage value V02 are previously obtained with respect to some urea solutions (reference urea solutions) each having a known urea concentration, and these calibration curves are stored in a storage means of the microcomputer 72. FIGS. 9 and 10 show examples of the first and second calibration curves, respectively. In these examples, the calibration curves of reference urea solutions having urea concentrations c1 (e.g., 27.5%) and c2 (e.g., 37.5%) are shown.

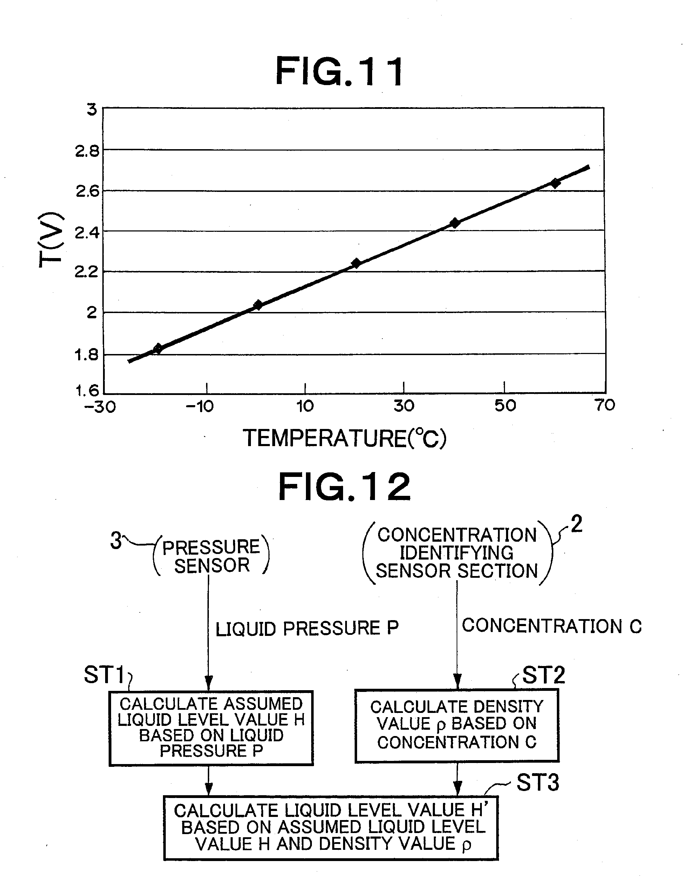

As shown in FIGS. 9 and 10, the concentration-corresponding first voltage value V01 and concentration-corresponding second voltage value V02 change depending on the temperature, so that when these calibration curves are used to identify a liquid to be measured, a liquid-temperature-corresponding output value T which is input from the temperature sensor 22a2 of the liquid temperature detecting section 22 through the liquid temperature detecting amplifier 71 is also used. FIG. 11 shows an example of the liquid-temperature-corresponding output value T. Such a calibration curve is also stored in the storage means of the microcomputer 72.

When the concentration-corresponding first voltage value V01 is measured, a temperature value is first obtained from the liquid-temperature-corresponding output value T of the liquid to be measured with reference to the calibration curve of FIG. 11. The obtained temperature value is set as t. Then, on the first calibration curve of FIG. 9, the concentration-corresponding first voltage values V01(c1;t) and V01(c2;t) of the respective calibration curves which correspond to the temperature value t are obtained. Subsequently, cx of the concentration-corresponding first voltage value V01(cx;t) obtained with respect to the liquid to be measured is determined by performing proportional calculation using the concentration-corresponding first voltage values V01(cl;t) and V01(c2;t) of the respective calibration curves. That is, cx is calculated from the following equation (1) based on V01 (cx;t), V01 (c1;t), and V01 (c2;t) :

$$cx = c1 +$$
$$(c2-c1)[V01(cx;t)-V01(c1;t)]$$
$$/[V01(c2;t)-V01(c1;t)] \cdots (1)$$

Similarly, when the concentration-corresponding second voltage value V02 is measured, the concentration-corresponding second voltage values V02(c1;t) and V02(c2;t) of the respective calibration curves which correspond to the temperature value t, which has been obtained as described above, are obtained on the second calibration curve of FIG. 10. Subsequently, cy of the concentration-corresponding second voltage value V02(cy;t) obtained with respect to the liquid to be measured is determined by performing proportional calculation using the concentration-corresponding second voltage values V02(c1;t) and V02(c2;t) of the respective calibration curves. That is, cy is calculated from the following equation (2) based on V01(cy;t), V01(c1;t), and V01 (c2;t) :

$$cy = c1 +$$
$$(c2-c1)[V02(cy;t)-V02(c1;t)]$$
$$/[V02(c2;t)-V02(c1;t)] \cdots (2)$$

When the first and second calibration curves of FIGS. 9 and 10 are created based on the liquid-temperature-corresponding output value T in place of the temperature, the storage of the calibration curve of FIG. 11 and conversion using the same can be omitted.

FIG. 12 is a flowchart showing a liquid level detecting process performed by the microcomputer 72.

The liquid pressure P of urea solution is detected by the pressure sensor 3. The detected value of the liquid pressure P is input to the microcomputer 72. Based on the input value of the liquid pressure P, the microcomputer 72 calculates an assumed liquid level value H, assuming that the urea solution has a predetermined density, for example, of zero, that is, the liquid is water having the density of 1 (ST1). When calculating the assumed liquid level value H, there may be used the following relational equation (3):

$$H = 0.0041P^2 + 10.181P \cdots (3)$$

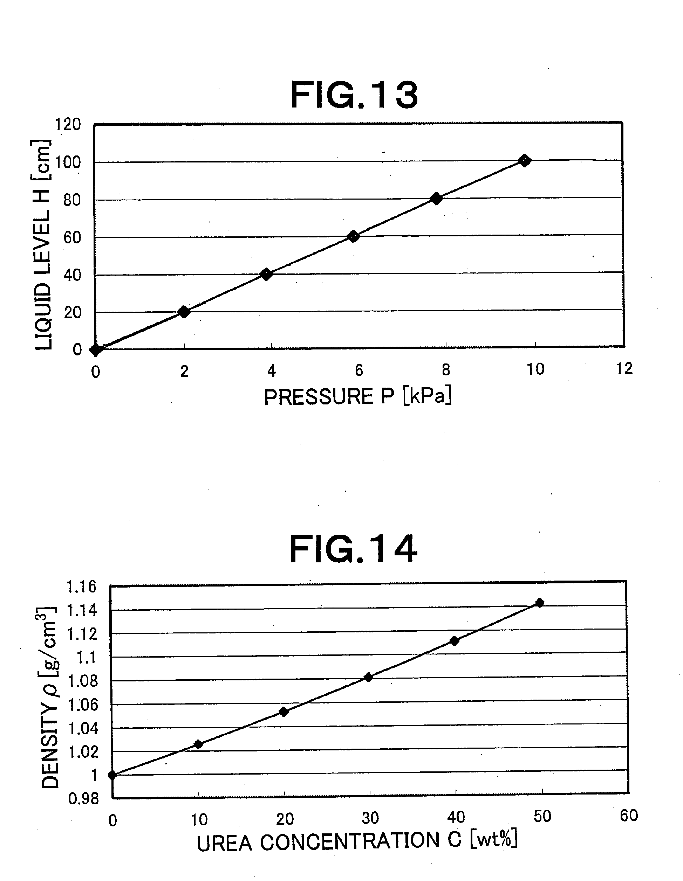

This equation can be obtained on the basis of a relationship between the water pressure P[kPa] and the water level (the assumed liquid level value) H[cm], as shown in FIG. 13, detected by using the pressure sensor 3 in advance.

On the other hand, the value C of concentration of urea solution obtained as above by using the concentration identifying sensor section 2 is input to the microcomputer 72. Based on the input value C of concentration of urea solution, the microcomputer 72 calculates a density value ρ of the urea solution of the concentration value C (ST2). FIG. 14 shows an example of a relationship between the urea concentration C[wt%] and density $\rho[g/cm^3]$ of the urea solution. The density value ρ of the urea solution can be calculated by using the following relational equation (4):

$$\rho = 7.450E(-6)C^2 + 2.482E(-3)C + 1.000 \quad \cdots \quad (4)$$

This equation can be obtained on the basis of the relationship of FIG. 14.

Then, the liquid level H' [cm] is calculated based on the assumed liquid level value H and the density value ρ obtained as above (ST3), by using the following relational equation (5):

$$H' = \rho H \quad \cdots \quad (5)$$

In the manner as described above, detection of the liquid pressure, identification of the liquid type and calculation of the liquid level based thereon can be performed correctly and quickly. The routine of the liquid level detection based on the concentration identification can appropriately be performed when a car engine starts up, or periodically, or at the time of a request from a driver or car (ECU to be described later), or key-off time. Further, it is possible to monitor the level of urea solution in the tank in a desired mode. A signal indicating the concentration and level of the liquid obtained as described above is output to an output buffer circuit 76 shown in FIG. 7 through a not shown D/A converter. The signal is then output as an analog output from the output buffer circuit 76 to a not shown main computer (ECU) which performs car engine combustion control. An analog output voltage value corresponding to the liquid temperature is also output to the main computer (ECU). A signal indicating the concentration and level of the liquid can be taken out as a digital output according to need, and can be input to a device that performs display, alarm, and other operations.

Further, an alarm may be issued when it is detected that the temperature of the urea solution is decreased near to the freezing temperature (about -13°C) of the urea solution based on the liquid-temperature-corresponding output value T input from the liquid temperature detecting section 22.

The concentration identification described above uses natural convection and uses a principle that there is a correlation between the kinetic viscosity of a liquid to be measured such as urea solution and sensor output. In order to enhance the accuracy of the concentration identification, it is preferable to make a forced flow due to an external factor less likely to occur in the liquid to be measured such as urea solution around the fin 21c for concentration detection section and fin 22c for liquid temperature detecting section. In this regard, it is preferable to use the cover member 2d, especially, one that forms the vertical introduction passage for liquid to be measured such as urea solution. The cover member 2d functions also as a protection member for preventing foreign matters from contacting the indirect-heating concentration detection section 21 and liquid temperature detecting section 22.

Although the urea solution is used as a fluid in the embodiment described above, the liquid may be another solution a density of which varies according to concentration of the dissolved substance contained therein, or other liquids.

**Claims**

1. A liquid level detecting method in which a liquid pressure applied to a pressure sensor is detected by the pressure sensor arranged to be in contact with liquid, and a level of the liquid is calculated based on the liquid pressure and a density of the liquid, comprising the steps of:

   calculating an assumed liquid level value based on the liquid pressure, assuming that the liquid has a predetermined density;
   identifying a concentration of the liquid;
   obtaining a density value of the liquid, based on the identified concentration of liquid and a relationship between the concentration and density of the liquid; and
   calculating the liquid level based on the assumed liquid level value and the obtained density value.

2. The liquid level detecting method as set forth in claim 1, wherein the liquid concentration is identified by applying a single pulse voltage to a heater of an indirect-heating concentration detection section comprising the heater and a temperature sensor to allow the heater to generate heat, and using outputs of a concentration detecting circuit including both the temperature sensor of the indirect-heating concentration detection section and a liquid temperature detecting section for detecting a temperature of the liquid.

3. The liquid level detecting method as set forth in claim 2, wherein, when identifying the liquid concentration, the liquid concentration is calculated by using a concentration-corresponding voltage value corresponding to a difference between an initial temperature of the temperature sensor and a peak temperature thereof when heat is generated by the heater.

4. The liquid level detecting method as set forth in claim 3, wherein an average initial voltage value which is obtained by sampling an initial voltage predetermined number of times before the start of application of the single pulse to the heater and averaging them is used as a voltage value corresponding to the initial temperature of the temperature sensor, an average peak voltage value which is obtained by sampling a peak voltage predetermined number of times before the end of application of the single pulse to the heater and averaging them is used as a voltage value corresponding to the peak temperature of the temperature sensor, and a difference between the average peak voltage value and average initial voltage value is used as the concentration-corresponding voltage value.

5. The liquid level detecting method as set forth in claim 3, wherein a calibration curve indicating a relationship between the temperature and concentration-corresponding voltage value with respect to known reference liquids having different concentrations is prepared, and the liquid concentration is identified using the calibration curve based on an output value corresponding to the temperature of the liquid to be identified and the concentration-corresponding voltage value.

6. The liquid level detecting method as set forth in claim 1, wherein the liquid is urea solution.

7. A liquid level detecting device, in which a level of liquid is calculated based on a liquid pressure and a density of the liquid, comprising;
a pressure sensor arranged to be in contact with the liquid, which detects the liquid pressure;
a concentration identifying sensor section having both an indirect-heating concentration detection section including a heater and temperature sensor and a liquid temperature detecting section for detecting the temperature of the liquid, the indirect-heating concentration detection section and liquid temperature detecting section being provided with a heat transfer member for concentration detection section and a heat transfer member for liquid temperature detecting section for heat exchange with the liquid, respectively;
a support portion to which the concentration identifying sensor section and pressure sensor are attached; and
a calculation section which applies a single pulse voltage to the heater of the indirect-heating concentration detection section to allow the heater to generate heat, identifies the concentration of liquid based on outputs of a concentration detecting circuit including both the temperature sensor of the indirect-heating concentration detection section and the liquid temperature detecting section, and obtains a density value of the liquid based on the identified concentration of liquid and a relationship between the concentration and density of the liquid,
wherein the calculation section calculates an assumed liquid level value based on the liquid pressure, assuming that the liquid has a predetermined density, and calculates the liquid level based on the assumed liquid level value and the obtained density value.

8. The liquid level detecting device as set forth in claim 7, wherein the calculation section identifies the liquid concentration by using a concentration-corresponding voltage value corresponding to a difference between an initial temperature of the temperature sensor and a peak temperature thereof when heat is generated by the heater.

9. The liquid level detecting device as set forth in claim 8, wherein an average initial voltage value which is obtained by sampling an initial voltage predetermined number of times before the start of application of the single pulse to the heater and averaging them is used as a voltage value corresponding to the initial temperature of the temperature sensor, an average peak voltage value which is obtained by sampling a peak voltage predetermined number of times before the end of application of the single pulse to the heater and averaging them is used as a voltage value corresponding to the peak temperature of the temperature sensor, and a difference between the average peak voltage value and average initial voltage value is used as the concentration-corresponding voltage value.

10. The liquid level detecting device as set forth in claim 8, wherein a liquid-temperature-corresponding voltage value corresponding to the temperature of liquid is input to the calculation section from the liquid temperature detecting section, and, in the calculation section, the liquid is identified based on an output value corresponding to the temperature of the liquid to be identified and the concentration-corresponding voltage value using the calibration curve indicating a relationship between the temperature and concentration-corresponding voltage value with respect to known reference liquids having different concentrations.

11. The liquid level detecting device as set forth in claim 7, wherein the liquid is urea solution.

# FIG.1

# FIG.2

# FIG.3

# FIG.4

2c
2a

21c
21

21e

24

23

2d

22c

22e

2c

22

# FIG.5

21e
21

21d

21a

21b

23

21c

# FIG.6

# FIG.7

# FIG.8

# FIG.9

# FIG.10

# FIG.11

# FIG.12

# FIG.13

# FIG.14

| **INTERNATIONAL SEARCH REPORT** | International application No. |
|---|---|
| | PCT/JP2005/019278 |

A.  CLASSIFICATION OF SUBJECT MATTER
*G01F23/14* (2006.01), *G01N25/18* (2006.01), *G01N9/04* (2006.01)

According to International Patent Classification (IPC) or to both national classification and IPC

B.  FIELDS SEARCHED

Minimum documentation searched (classification system followed by classification symbols)
*G01F23/14* (2006.01), *G01N25/18* (2006.01), *G01N9/04* (2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2003-302277 A  (Sumitomo Electric Industries, Ltd.), 24 October, 2003 (24.10.03), Par. Nos. [0002], [0003] (Family: none) | 1-11 |
| Y | JP 2-156118 A  (Fuji Denki Kabushiki Kaisha), 15 June, 1990 (15.06.90), Page 1, lower right column, line 2 to page 2, upper left column, line 18 (Family: none) | 1-11 |

| ☒  Further documents are listed in the continuation of Box C. | ☐  See patent family annex. |
|---|---|

| | |
|---|---|
| *      Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| 10 November, 2005 (10.11.05) | 22 November, 2005 (22.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/019278 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 3118459 B2 (Anritsu Corp.), 18 December, 2000 (18.12.00), Column 9, line 49 to column 10, line 22; column 23, lines 1 to 6; Fig. 22 & WO 92/10742 A1 & EP 515695 A1 & US 5251980 A | 1-11 |
| Y | JP 6-109674 A (Snow Brand Milk Products Co., Ltd.), 22 April, 1994 (22.04.94), Par. Nos. [0001], [0011] & EP 576260 A1 & US 5348394 A1 & AU 4142393 A & CA 2098867 A1 | 1-11 |
| Y | JP 2004-101385 A (Mitsui Mining & Smelting Co., Ltd.), 02 April, 2004 (02.04.04), Full text; all drawings & EP 1538438 A & WO 2004/25287 A1 | 1-11 |
| Y | JP 2004-125465 A (Mitsui Mining & Smelting Co., Ltd.), 22 April, 2004 (22.04.04), Full text; all drawings & WO 2004/29615 A1 | 1-11 |

Form PCT/ISA/210 (continuation of second sheet) (April 2005)

**EP 1 806 566 A1**

## REFERENCES CITED IN THE DESCRIPTION

### Patent documents cited in the description

- JP 11153561 A